# EUROPEAN PATENT SPECIFICATION

(11) **EP 1 444 559 B1**
(45) Date of publication and mention of the grant of the patent: **15.03.2006**
(21) Application number: 02777666.5
(22) Date of filing: 24.10.2002
(51) Int. Cl.: G06F 1/00

(54) **SYSTEM AND METHOD FOR AN IMPROVED AUDIO EXPERIENCE FOR ONLINE GAMING**
SYSTEM UND VERFAHREN ZUR VERBESSERTEN AUDIOERFAHRUNG BEI ONLINE-SPIELEN
SYSTEME, PROCEDE ET ARTICLE DE FABRICATION POUR UNE MEILLEURE EXPERIENCE AUDIO DE JEU EN LIGNE

(30) Priority: 07.11.2001 US 35717
(43) Date of publication of application: 11.08.2004
(73) Proprietor: Koninklijke Philips Electronics N.V., 5621 BA Eindhoven (NL)
(72) Inventor: SAGAR, Richard, B., NL-5656 AA Eindhoven (NL)
(74) Representative: Groenendaal, Antonius W. M.
(86) International application number: PCT/IB2002/004470
(87) International publication number: WO 2003/040857

(56) References cited:
- EP-A- 0 777 208
- US-A- 5 890 017
- US-A- 5 902 947
- US-A1- 2001 014 620

## Description

The present inventions relate to the field of electronic audio reproduction. More specifically, the present inventions, in an exemplary embodiment, relate to a system, method of operation, and article of manufacture for providing background music that is related to a context of a software environment. More specifically, the present inventions, in an exemplary embodiment, relate to a system, method of operation, and article of manufacture for providing background music that is appropriate to a context of a game software environment. More specifically, the present inventions, in an exemplary embodiment, may be used to incorporate music already present at a computer in a manner that is appropriate to a context of a game in order to enhance enjoyment for the user and personalize the experience.

With some software, for example gaming software, music may provide an addition to the ambience of the software. By way of example and not limitation, in certain electronic games, contexts arising from game play may change and it may be desirable to have the background music may change to meet the new situation. Many of these changes in context may be unpredictable, especially multiplayer gaming software environments.

Although background music ideally adapts to the game's context, a game service or server such as an Internet or other data communications based service or server may not be able to provide background music of a nature appealing to the game users. In part, this may arise from limited bandwidth and/or from latency inherent in data communications environments.

United States Patent 6,263,496 issued to Meyer et al. for "SELF MODIFYING SCENE GRAPH" teaches a system and method for animation sequencing. In part, portions of software may be created that comprise functions and arguments for those functions useful in creating an animation sequence such as during game play. In subsequent actions, parameters may be passed which are used as arguments to these functions, allowing alteration of animation sequences without creating additional instances of initially encoded functions. Although this may require less bandwidth over a data communications channel, Meyer neither teaches, suggests, or motivates the use of categorization data sent from a server to a second computer operatively connected to the server over a data network where the second computer has access to a plurality of local audio data files, each audio data file associated with at least one of the categories.

United States Patent 6,243,761 issued to Mogul et al. for "METHOD FOR DYNAMICALLY ADJUSTING MULTIMEDIA CONTENT OF A WEB PAGE BY A SERVER IN ACCORDANCE TO NETWORK PATH CHARACTERISTICS BETWEEN CLIENT AND SERVER" teaches dynamically adjusting a web page by a server in response to measured effective bandwidth and/or latency. This approach would not satisfy game users with respect to background audio as such an approach would entail dynamically changing the quality and possibly content of that audio during game play.

A need therefore exists to be able to provide background audio, especially background audio of a high quality, that adapts to a context of a software environment and that can adapt to that context during stochastic scenarios.

In an exemplary embodiment, the present inventions comprise a system for electronically providing audio that is sensitive to a context of which the audio is a part. In a claimed embodiment, such a system may comprise a first computer operatively connected to a data network, the first computer having category data representative of a plurality of categories of audio where the categories are associatable with a context of executable software, and a second computer operatively connected to the server via the data network, the second computer executing at least a portion of the executable software and further having local access a plurality of audio data files, each audio data file being associated with at least one of the categories.

In an exemplary embodiment, at predetermined intervals, the first computer may periodically determine a context of a state of the software executing in the second computer, which may change over time, and select a category at the first computer in response to the context where the category is associated with the context. Category data are then transmitted to the second computer and selection software at least partially executing in the second computer selects an audio data file local to the second computer in response to the category data transmitted to the second computer. The selected audio data file is then reproduced at the second computer.

It is understood that the scope of protection is not limited by the summary of an exemplary embodiment set out above, but is only limited by the claims.

These and other features, aspects, and advantages of the present inventions will become more fully apparent from the following description, appended claims, and accompanying drawings in which:
Fig. 1 is a schematic view of an exemplary system layout; and
Fig. 2 is a flowchart of an exemplary embodiment of the present system.

In general, throughout this description, if an item is described as implemented in software, it can equally well be implemented as hardware.

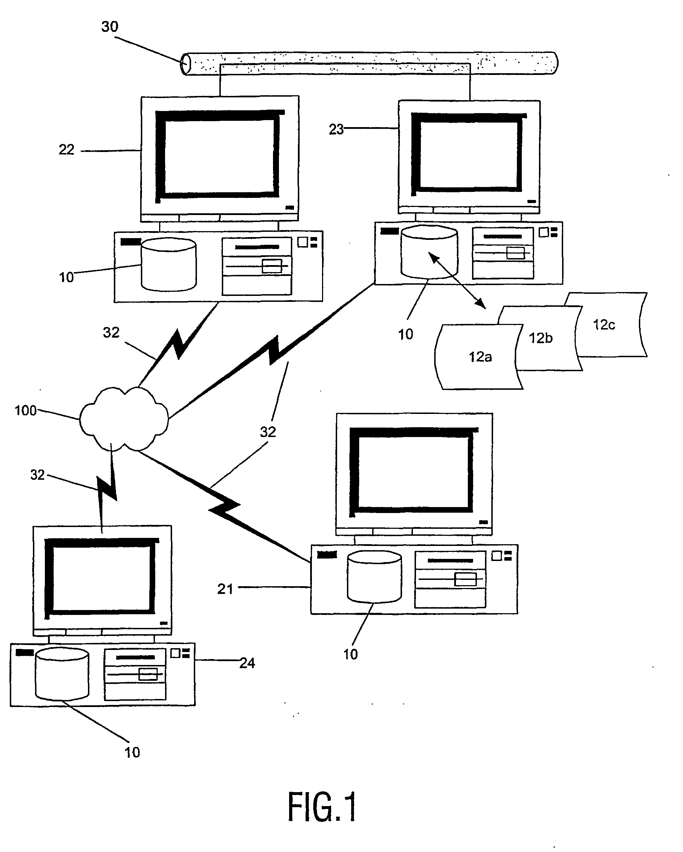

Referring now to Fig. 1, a schematic of an exemplary embodiment, first computer 21 is operatively connected to data network 100. In the preferred embodiment, data network 100 is the Internet but can comprise dial-up networks, private networks, local area networks such as 30, and the like, or combinations thereof. Data store 10 local to first computer 21 contains data files whose data are representative of predetermined categories. In an exemplary embodiment, the data are associatable with categories that are themselves associatable with a context of executable software such as audiovisual software. In the description of this exemplary mode, the executable audiovisual software is gaming software but can be other software, by way of example and not limitation instructional software; catalog software, such as travel brochures or other brochures or offerings for sales; and the like.

The category data are relatively small, typically requiring a few bytes, especially when compared to audio files, referred to generally as "12" and shown in Fig. 1 as 12a, 12b, and 12c, which can require several thousand bytes per second of high quality audio, by way of example and not limitation such as wave or MPEG layer 3 audio. As used herein, "audio" may comprise music, vocals, speech, sound effects, and the like, or combinations thereof.

Additionally, first computer 21 may have access to data files containing data descriptions of music, by way of example and not limitation such as MIDI formatted files. MIDI formatted files are typically condensed descriptions of music but depend on sound synthesis equipment at a computer to reconstruct music using the MIDI files. Additionally, MIDI is not capable of reproducing voiced sounds.

Second computer, e.g. 22, may also be present such as in a multiplayer game scenario and be operatively connected to data network 100, either directly or via local area network 30 such as by gateway software. Audio files 12a, 12b, and 12c, by way of example and not limitation high quality wave files, will be present at or otherwise locally accessible to second computer 22 such as resident on data store 10 directly connected to second computer 22, via local area network 30, or a combination thereof, and are associatable with at least one of the categories. Software executing in second computer 22 will be responsive to category data sent by first computer 21 to select a desired audio file 12a,12b,12c. In currently envisioned embodiments, second computer 22 may further comprise one or more sound cards capable of producing MIDI, wave table, or combinations thereof. Therefore, second computer 22 may be used to reproduce recorded audio files 12a, 12b, and 12c such as wave files, sounds using music data descriptors such as MIDI, or a combination thereof. Additionally, each audio file 12a,12b,12c may comprise an entire audio work or some portion of that work.

As used herein, each of computers 21,22,23,24 may be connected to data network 100 via modems or routers such as DSL routers, cable routers, and the like. Additionally, as data network 100 may further include local area network 30, computers 21,22,23,24 may be connected to local area network 30 via LAN adapters.

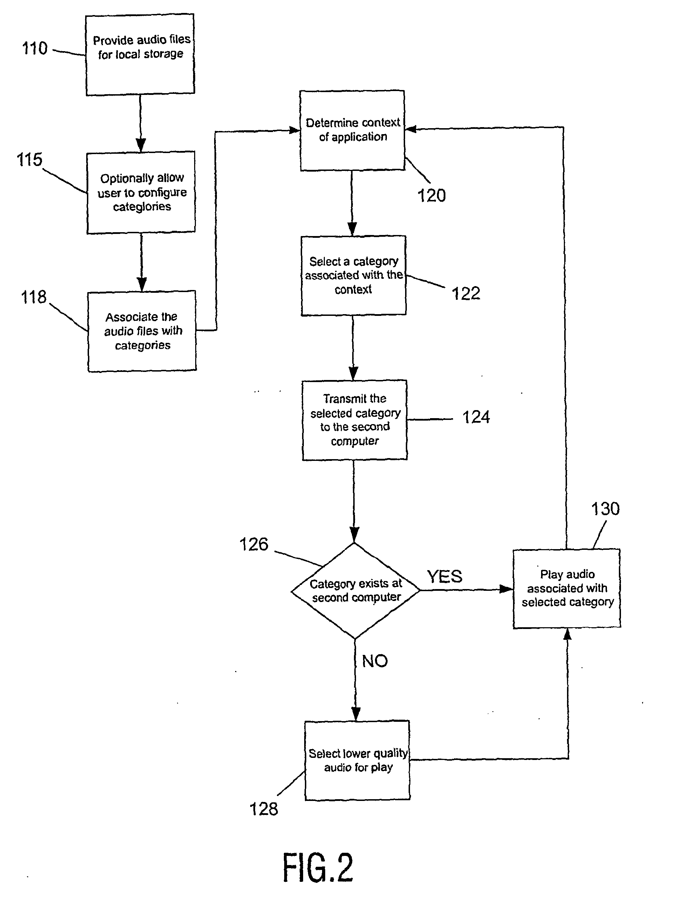

In the operation of an exemplary embodiment, referring now to Fig. 1 and Fig. 2, a flowchart of an exemplary embodiment, operation of an exemplary embodiment will be described in terms of interactive computer game play. However, this is by way of example and not of limitation as the inventions described herein are not limited by the description of this exemplary embodiment set out above but are only limited by the claims.

In game play, two game players may play opposite or in conjunction with each other, e.g. one game player at game computer 24 playing another game player at game computer 22. In this exemplary configuration, computer 21 or computer 23 may be acting as a game server. Game players often are able to configure other features of game play, including backgrounds, story lines, avatar capabilities, and the like.

Background audio such as music, speech, and noises can add to the ambience of the game play. Background audio that adapts to the context of the game play is more desirable than static audio such as static musical scores. However, game play progress, in part because of the human beings' decisions, are more often stochastic than deterministic.

Recognizing the stochastic nature of the game play, at predetermined intervals, either game computer 22, game computer 24, server computer 21, or a combination thereof may determine the current context of game play 120, i.e. the state of the software executing in either game computer 22 or game computers 22,24. This state is either communicated back to or otherwise determined by game computer 24 and/or to server computer 21.

In an embodiment, the present inventions may utilize audio data files (12) already present at game computer 22. Use of such files frees up data communications bandwidth as it provides a source of audio that does not have to be downloaded in real-time to suit the context of the game play. Additionally, a user may feel a personal sense of attachment to the game as it is playing music from their own collection. United States Patent 5,963,957 issued to Hoffberg for "BIBLIOGRAPHIC MUSIC DATA BASE WITH NORMALIZED MUSICAL THEMES," discloses mechanisms for categorizing music.

Audio files 12a, 12b, and 12c may be provided with the game application or may be separately available, such as files already present at game computers 22,24. The system may further include categorization software executable at game computers 22, 24. This categorization software will be capable of locating and categorizing audio files accessible to second computer 22. Such categorization software may be software capabilities in the game application or may include software external to the game application such as a utility or one or more operating system services.

Using the context, game computers 22,24 or server computer 21, depending on the configuration of game play, selects a category 122 associated with that context from a set of categories that have been determined before game play, during game play but prior to the current context, or a combination thereof. The category is transmitted 124 to game computers 22,24, a process that consumes little bandwidth because the datagram required is fairly small.

Upon receipt of the datagram, software executing in game computers 22,24 selects an audio data file local to or otherwise accessible to game computers 22,24 and begins to play that audio data file 130, e.g. a wave file or a MIDI file or a combination thereof. Numerous methods exist to accomplish the playing of the audio, as will be familiar to those of ordinary skill in the computer sound software arts, by way of example and not limitation using ActiveX components or software such as WINAMP marketed by NULLSOFT, INC. or REALJUKEBOX marketed by RN, INC. of Seattle, WA.

If an audio data file is not present at either of game computers 22,24 that will satisfy the desired category, in a currently envisioned alternative embodiment game computers 22,24 or server computer 21 at 126, 128 may supply lower quality audio data or MIDI data to the game computer 22,24 lacking the audio data file.

In a currently preferred embodiment, game computer 24 and game computer 22 have their categorizations predetermined, such as by the game software to be executed or by server computer 21. One such method of categorization is described in United States serial number 09/792,145 (attorney docket US 018017) filed February 21, 2001 for "DATA STREAMING SYSTEM SUBSTITUTING LOCAL CONTENT FOR UNICASTS,".

Another such method is disclosed in United States Patent 5,963,957 issued to Hoffberg.

Additionally, a game player may be allowed to select a subset of categories 115 from a larger set of categories prior to game play and communicate that subset category data to the appropriate computer, e.g. game computers 22,24 or server computer 21.

In alternative embodiments, categorization may occur or change at or during predetermined events, by way of example and not limitation comprising concurrently with game play, at the initiation of game play, when game software is first installed or updated, periodically at predetermined intervals, or the like, or a combination thereof.

In other alternative embodiments, a computer such as server computer 21 may supply another computer, e.g. game computer 22, with audio files for use during play in a batch manner, either before or during game play. If the game computer is computer 22, computer 22 could access audio files, e.g. 12a,12b, and 12c, that are either local to data storage at computer 22 or over local area network 30 to files at another computer, e.g. computer 23.

In other game embodiments, game computer 22 may be part of a game environment such as role acted games in which humans don game gear and play against each other such as with laser or light "weapons."

Although the above exemplary embodiment has been described for game play, the present inventions may be used in numerous other embodiments. In a currently envisioned embodiment, a user may be presented with categories associated with a retail enterprise and be able to select music for fee or purchase that is appropriate with the contexts of additional software, e.g. a catalog. In this embodiment, server computer 21 may provide selections of music as samples or otherwise given the context of the catalog being viewed.

In a similar embodiment, a user such as a computer 24 may be provided with one or more music selections depending on the context of a search for music or other files. By way of further example and not limitation, during a context of the executable software, e.g. the game software, a user may hear a snippet or allowable portion of a selection and want to purchase that work or works like that work, e.g. a CDROM comprising that work. In this exemplary embodiment, the user may be able to provide feedback such as through a pop-up window or other means to first computer 21 whereby the user would be allowed to purchase the work or works like that work.

In a further currently envisioned embodiment, a user can have predetermined audio files locally stored at the user's computer, e.g. computer 22, and have the user's computer 22 or another computer such as server computer 21 automatically select which of the user's audio to play in the background during other use of the user's computer 22, e.g. be sensitive to the context of the user's work such as editing documents, entering data, composing patent applications, and the like.

It will be understood that various changes in the details, materials, and arrangements of the parts which have been described and illustrated above in order to explain the nature of these inventions may be made by those skilled in the art without departing from the principle and scope of the inventions as recited in the following claims.

## Claims

1. A system for providing audio electronically that is sensitive to a context of a software environment of which the audio is a part, comprising:
- a) a first computer (21) operatively connected to a data network (30,100), the first computer (21) comprising category data representative of a plurality of categories of audio, the categories associatable with a context of executable software;
- b) a second computer (22) operatively connected to the first computer (21) via the data network (30,100), the second computer (22) executing at least a portion of the executable software, the second computer (22) further having access to a plurality of local audio data files (12), each audio data file being associatable with at least one of the categories; and
c) selection software at least a portion of which is executing in the second computer (22) and responsive to category data sent by the first computer (21) in response to the context to select an audio data file local to the second computer (22) for reproduction at the second computer (22).

2. The system of claim 1 wherein the local audio data file (12) is at least one of an audio data file (12) present on a storage medium directly connected to the second computer (22) and an audio data file (12) present on a storage medium (10) accessible to the second computer (22) via a local area network (30).

3. The system of claim 1 wherein the audio data file (12) comprises at least one of music data files and voice data files.

4. The system of claim 3 wherein the music data file comprises high quality music data files.

5. The system of claim 1 wherein the executable software is game software.

6. The system of claim 1 wherein the data network (30,100) comprises at least one of the Internet accessed via modem, the Internet accessed via routers, and local area networks (30).

7. The system of claim 1, further comprising:
- a) musical data descriptors local to the first computer (21); and
- b) a music generator local to the second computer (22), the music generator responsive to the music data descriptors to generate music at the second computer (22).

8. The system of claim 7 wherein the musical data descriptors comprise MIDI formatted data.

9. The system of claim 7 wherein the musical data descriptors are sent by the first computer (21) to the second computer (22).

10. The system of claim 1 further comprising categorization software executable at the second computer (21), the categorization software capable of locating and categorizing audio files (12) accessible to the second computer (21).

11. The system of claim 10 wherein the categorization software is selected from the group of categorization software consisting of software capabilities in the game application, software external to the game application, and software that comprises one or more operating system services.

12. The system of claim 1 further comprising:
- a) a third computer (23) operatively connected to the first computer (21) via the data network (30,100), the third computer (23) executing at least a portion of the executable software, the third computer (23) further having access to a plurality of local audio data files (12), each audio data file (12) being associated with at least one of the categories, the third computer (23) operatively connected to the second computer (22) via the data network (30,100); and
- b) selection software at least a portion of which is executing in the third computer (23) and responsive to category data sent by the first computer (21) in response to the context to select an audio data file (12) local to the third computer (23) for reproduction at the third computer (23).

13. The system of claim 12 wherein:
- a) the first computer (21) is a game server computer;
- b) the executable software is game software; and
- c) the selection software executing in the second computer (22) and the third computer (23) is responsive to category data sent by the first computer (21) to select an audio data file local to the second computer (22) for reproduction at the second computer (22) and to select an audio data file (12) local to the third computer (23) for reproduction at the third computer (23);
wherein the first computer (21) selects the categories based at least in part on a context of the game software executing in at least one of the second computer (22) and the third computer (23) for game play between the second computer (22) and the third computer (23).

14. A method of producing audio during execution of software on a system of claim 1, comprising:
- a) at predetermined intervals, determining a context of a state of the software executing in the second computer (22) by the first computer (21);
- b) selecting a category at the first computer (21) in response to the context, the category associated with the context;
- c) transmitting the category to the second computer (22);
- d) selection of an audio data file (12) accessible locally to the second computer (22) by the selection software at the second computer (22) in response to the category transmitted to the second computer (22); and
- e)reproduction of audio using the audio data file (12) by the second computer (22).

15. The method of claim 14 wherein step (b) further comprises:
- i) allowing a user to select a subset of categories from a set of categories; and
- ii) allowing the user to associate the selected subset of categories with one or more contexts for use during execution of the executable software at the second computer (22).

16. The method of claim 15 wherein step (b) further comprises storing the associations at the first computer (21) for use during execution of the executable software at the second computer (22).

17. The method of claim 14wherein the executable software at the second computer (22) comprises audiovisual software.

18. The method of claim 14further comprising creating a set of categories during at least one of concurrently with selection software execution, at the initiation of the selection software, when the selection software is first installed, when the selection software is updated, and periodically at predetermined intervals.

19. The method of claim 14 further comprising:
- a) locating audio files (12) accessible to the second computer; and
- b) categorizing the located audio files (12) into categories compatible with categories transmitted to the second computer.

20. A computer program embodied within a computer-readable medium, the computer program, when executed by a computer, causes the computer to execute the method steps of claim 14.

## Patentansprüche

1. System zum elektronischen Bereitstellen von Audio, welche für einen Kontext einer Software-Umgebung empfindlich ist, von welcher das Audio ein Teil ist, umfassend:
- a) einen ersten Computer (21), welcher wirksam mit einem Datennetzwerk (30, 100) verbunden ist, wobei der erste Computer (21) Kategoriedaten umfasst, welche für mehrere Audiokategorien repräsentativ sind, wobei die Kategorien einem Kontext ausführbarer Software zuordenbar sind;
- b) einen zweiten Computer (22), welcher über das Datennetzwerk (30, 100) wirksam mit dem ersten Computer (21) verbunden ist, wobei der zweite Computer (22) mindestens einen Abschnitt der ausführbaren Software ausführt, der zweite Computer (22) weiterhin Zugang zu mehreren lokalen Audiodatendateien (12) besitzt, wobei jede Audiodatendatei mindestens einer der Kategorien zuordenbar ist; und
- c) Auswähl-Software, von welcher mindestens ein Abschnitt auf dem zweiten Computer (22) ausgeführt wird und als Reaktion auf Kategoriedaten, welche durch den ersten Computer (21) als Reaktion auf den Kontext gesendet werden, um eine Audiodatendatei lokal auf dem zweiten Computer (22) zur Wiedergabe auf dem zweiten Computer (22) auszuwählen.

2. System nach Anspruch 1, wobei die lokale Audiodatendatei (12) mindestens entweder eine Audiodatendatei (12), welche auf einem Speichermedium vorhanden ist, welches unmittelbar mit dem zweiten Computer (22) verbunden ist, oder eine Audiodatendatei (12) ist, welche auf einem Speichermedium (10) vorhanden ist, welches für den zweiten Computer (22) über ein lokales Netzwerk (30) zugänglich ist.

3. System nach Anspruch 1, wobei die Audiodatendatei (12) mindestens entweder eine von Musikdatendateien oder eine von Sprachdatendateien umfasst.

4. System nach Anspruch 3, wobei die Musikdatendatei Musikdatendateien hoher Qualität umfasst.

5. System nach Anspruch 1, wobei die ausführbare Software eine Spiele-Software ist.

6. System nach Anspruch 1, wobei das Datennetzwerk (30, 100) mindestens entweder das über Modem zugängliche Internet, das über Router zugängliche Internet oder lokale Netzwerke (30) ist.

7. System nach Anspruch 1, weiterhin umfassend:
- a) Musikdatendeskriptoren lokal auf dem ersten Computer (21); und
- b) einen Musikerzeuger lokal auf dem zweiten Computer (22), wobei der Musikerzeuger als Reaktion auf die Musikdatendeskriptoren auf dem zweiten Computer (22) Musik erzeugt.

8. System nach Anspruch 7, wobei die Musikdatendeskriptoren MIDIformatierte Daten umfassen.

9. System nach Anspruch 7, wobei die Musikdatendeskriptoren durch den ersten Computer (21) an den zweiten Computer (22) gesendet werden.

10. System nach Anspruch 1, weiterhin umfassend eine Kategorisierungs-Software, welche auf dem zweiten Computer (21) ausführbar ist, wobei die Kategorisierungs-Software in der Lage ist, Audiodateien (12), welche für den zweiten Computer (21) zugänglich sind, zu lokalisieren und zu kategorisieren.

11. System nach Anspruch 10, wobei die Kategorisierungs-Software aus der Gruppe von Kategorisierungs-Software ausgewählt ist, welche aus Software-Fähigkeiten in der Spieleanwendung, aus zur Spieleanwendung externer Software und aus Software besteht, welche einen oder mehrere Betriebssystemsdienste umfasst.

12. System nach Anspruch 1, weiterhin umfassend:
- a) einen dritten Computer (23), welcher über das Datennetzwerk (30, 100) wirksam mit dem ersten Computer (21) verbunden ist, wobei der dritte Computer (23) mindestens einen Abschnitt der ausführbaren Software ausführt, der dritte Computer (23) weiterhin Zugang zu mehreren lokalen Audiodatendateien (12) aufweist, wobei jede Audiodatendatei (12) mindestens einer der Kategorien zugeordnet ist, der dritte Computer (23) über das Datennetzwerk (30, 100) wirksam mit dem zweiten Computer (22) verbunden ist; und
- b) Auswähl-Software, von welcher mindestens ein Abschnitt auf dem dritten Computer (23) ausgeführt wird und auf Kategoriedaten reagiert, welche durch den ersten Computer (21) als Reaktion auf den Kontext gesendet werden, um eine Audiodatendatei (12) lokal auf dem dritten Computer (23) zur Wiedergabe auf dem dritten Computer (23) auszuwählen.

13. System nach Anspruch 12, wobei:
- a) der erste Computer (21) ein Spiele-Server-Computer ist;
- b) die ausführbare Software Spiele-Software ist; und
- c) die Auswähl-Software, welche auf dem zweiten Computer (22) ausgeführt wird, und der dritte Computer (23) auf Kategoriedaten reagieren, welche durch den ersten Computer (21) gesendet werden, um eine Audiodatendatei lokal auf dem zweiten Computer (22) zur Wiedergabe auf dem zweiten Computer (22) auszuwählen und um eine Audiodatendatei (12) lokal auf dem dritten Computer (23) zur Wiedergabe auf dem dritten Computer (23) auszuwählen;
wobei der erste Computer (21) die Kategorien auf der Grundlage mindestens teilweise eines Kontextes der Spiele-Software auswählt, welche mindestens entweder auf dem zweiten Computer (22) oder auf dem dritten Computer (23) für einen Spielablauf zwischen dem zweiten Computer (22) und dem dritten Computer (23) ausgeführt wird.

14. Verfahren zum Produzieren von Audio während einer Ausführung von Software auf einem System nach Anspruch 1, umfassend:
- a) Bestimmen eines Kontexts eines Zustands der Software, welche auf dem zweiten Computer (22) ausgeführt wird, in vorbestimmten Intervallen durch den ersten Computer (21);
- b) Auswählen einer Kategorie auf dem ersten Computer (21) als Reaktion auf den Kontext, wobei die Kategorie dem Kontext zugeordnet ist;
- c) Übertragen der Kategorie an den zweiten Computer (22);
- d) Auswählen einer Audiodatendatei (12), welche lokal auf dem zweiten Computer (22) durch die Auswähl-Software auf dem zweiten Computer (22) als Reaktion auf die Kategorie zugänglich ist, welche an den zweiten Computer (22) übertragen wurde; und
- e) Wiedergeben von Audio unter Verwendung der Audiodatendatei (12) durch den zweiten Computer (22).

15. Verfahren nach Anspruch 14, wobei Schritt (b) weiterhin umfasst:
- i) Gestatten, dass ein Benutzer einen Untersatz von Kategorien aus einem Satz von Kategorien auswählt; und
- ii) Gestatten, dass der Benutzer den ausgewählten Untersatz von Kategorien einem oder mehreren Kontexten zur Verwendung während einer Ausführung der ausführbaren Software auf dem zweiten Computer (22) zuordnet.

16. Verfahren nach Anspruch 15, wobei Schritt (b) weiterhin Speichern der Zuordnungen auf dem ersten Computer (21) zur Verwendung während einer Ausführung der ausführbaren Software auf dem zweiten Computer (22) umfasst.

17. Verfahren nach Anspruch 14, wobei die ausführbare Software auf dem zweiten Computer (22) audiovisuelle Software umfasst.

18. Verfahren nach Anspruch 14, weiterhin umfassend Erzeugen eines Satzes von Kategorien während mindestens entweder gleichzeitig einer Ausführung der Auswähl-Software, der Initialisierung der Auswähl-Software, wenn die Auswähl-Software zum ersten Mal installiert wird, wenn die Auswähl-Software aktualisiert wird und periodisch in vorbestimmten Intervallen.

19. Verfahren nach Anspruch 14, weiterhin umfassend:
- a) Lokalisieren von Audiodateien (12), welche für den zweiten Computer zugänglich sind; und
- b) Kategorisieren der lokalisierten Audiodateien (12) in Kategorien, welche mit den Kategorien verträglich sind, welche an den zweiten Computer übertragen wurden.

20. Computer-Programm, welches innerhalb eines Computer-lesbaren Mediums verkörpert ist, wobei das Computerprogramm, wenn es durch einen Computer ausgeführt wird, bewirkt, dass der Computer die Verfahrensschritte des Anspruchs 14 ausführt.

## Revendications

1. Système destiné à fournir par voie électronique un contenu audio sensible à un contexte d'un environnement logiciel dont le contenu audio est une partie, comprenant :
- a) un premier ordinateur (21) connecté de manière à pouvoir fonctionner à un réseau de données (30, 100), le premier ordinateur (21) comportant des données de catégorie représentatives d'une pluralité de catégories de contenu audio, les catégories pouvant être associées à un contexte de logiciel exécutable;
- b) un deuxième ordinateur (22) connecté de manière à pouvoir fonctionner au premier ordinateur (21) par le biais du réseau de données (30, 100), le deuxième ordinateur (22) assurant l'exécution d'au moins une partie du logiciel exécutable, le deuxième ordinateur (22) ayant en outre accès à une pluralité de fichiers de données audio locaux (12), chaque fichier de données audio pouvant être associé à au moins une des catégories, et
- c) un logiciel de sélection dont au moins une partie assure l'exécution dans le deuxième ordinateur (22) et réagissant aux données de catégorie envoyées par le premier ordinateur (21) en réaction au contexte afin de sélectionner un fichier de données audio se trouvant sur le deuxième ordinateur (22) pour la reproduction sur le deuxième ordinateur (22).

2. Système suivant la revendication 1, dans lequel le fichier de données audio local (12) est au moins un parmi un fichier de données audio (12) présent sur un support de stockage directement connecté au deuxième ordinateur (22) et un fichier de données audio (12) présent sur un support de stockage (10) accessible pour le deuxième ordinateur (22) par le biais d'un réseau local (30).

3. Système suivant la revendication 1, dans lequel le fichier de données audio local (12) comprend au moins un parmi des fichiers de données musicales et des fichiers de données de parole.

4. Système suivant la revendication 3, dans lequel le fichier de données musicales comprend des fichiers de données musicales de haute qualité.

5. Système suivant la revendication 1, dans lequel le logiciel exécutable est un logiciel de jeu.

6. Système suivant la revendication 1, dans lequel le réseau de données (30, 100) comprend au moins un parmi l'Internet avec un accès par le biais d'un modem, l'Internet avec un accès par le biais de routeurs, et des réseaux locaux (30).

7. Système suivant la revendication 1, comprenant en outre :
- a) des descripteurs de données musicales se trouvant sur le premier ordinateur (21), et
- b) un générateur de musique se trouvant sur le deuxième ordinateur (22), le générateur de musique réagissant aux descripteurs de données musicales afin de générer une musique sur le deuxième ordinateur (22).

8. Système suivant la revendication 7, dans lequel les descripteurs de données musicales comprennent des données de format MIDI.

9. Système suivant la revendication 7, dans lequel les descripteurs de données musicales sont envoyés par le premier ordinateur (21) au deuxième ordinateur (22).

10. Système suivant la revendication 1, comprenant en outre un logiciel de catégorisation exécutable sur le second ordinateur (21), le logiciel de catégorisation étant en mesure de localiser et de catégoriser des fichiers audio (12) accessibles pour le deuxième ordinateur (21).

11. Système suivant la revendication 10, dans lequel le logiciel de catégorisation est sélectionné parmi le groupe d'un logiciel de catégorisation comprenant des capacités logicielles dans l'application de jeu, d'un logiciel situé en dehors de l'application de jeu, et d'un logiciel comprenant un ou plusieurs services de système d'exploitation.

12. Système suivant la revendication 1, comprenant en outre :
- a) un troisième ordinateur (23) connecté de manière à pouvoir fonctionner au premier ordinateur (21) par le biais du réseau de données (30, 100), le troisième ordinateur (23) assurant l'exécution d'au moins une partie du logiciel exécutable, le troisième ordinateur (23) ayant en outre accès à une pluralité de fichiers de données audio locaux (12), chaque fichier de données audio (12) étant associé à au moins une des catégories, le troisième ordinateur (23) étant connecté de manière à pouvoir fonctionner au deuxième ordinateur (22) par le biais du réseau de données (30; 100), et
- c) un logiciel de sélection dont au moins une partie assure l'exécution dans le troisième ordinateur (23) et réagissant aux données de catégorie envoyées par le premier ordinateur (21) en réaction au contexte afin de sélectionner un fichier de données audio (12) se trouvant sur le troisième ordinateur (23) pour la reproduction au niveau du troisième ordinateur (23).

13. Système suivant la revendication 12, dans lequel :
- a) le premier ordinateur (21) est un ordinateur serveur de jeux;
- b) le logiciel exécutable est un logiciel de jeu, et
- c) le logiciel de sélection assure l'exécution dans le deuxième ordinateur (22) et le troisième ordinateur (23) réagit aux données de catégorie envoyées par le premier ordinateur (21) afin de sélectionner un fichier de données audio se trouvant sur le deuxième ordinateur (22) pour la reproduction sur le deuxième ordinateur (22), et afin de sélectionner un fichier de données audio (12) se trouvant sur le troisième ordinateur (23) pour la reproduction sur le troisième ordinateur (23);
dans lequel le premier ordinateur (21) sélectionne les catégories sur la base au moins en partie d'un contexte du logiciel de jeu assurant l'exécution dans au moins un des deuxième ordinateur (22) et troisième ordinateur (23) pour une partie de jeu entre le deuxième ordinateur (22) et le troisième ordinateur (23).

14. Procédé destiné à produire un contenu audio durant l'exécution d'un logiciel sur un système suivant la revendication 1, comprenant :
- a) à des intervalles prédéterminés, la détermination d'un contexte d'un état du logiciel assurant l'exécution dans le deuxième ordinateur (22) par le premier ordinateur (21);
- b) la sélection d'une catégorie sur le premier ordinateur (21) en réaction au contexte, la catégorie étant associée au contexte;
- c) la transmission de la catégorie au deuxième ordinateur (22);
- d) la sélection d'un fichier de données audio (12) auquel le deuxième ordinateur (22) peut accéder de manière locale par le logiciel de sélection sur le deuxième ordinateur (22) en réaction à la catégorie transmise au deuxième ordinateur (22), et
- e) la reproduction du contenu audio à l'aide du fichier de données audio (12) par le deuxième ordinateur (22).

15. Procédé suivant la revendication 14, dans lequel l'étape (b) comprend en outre :
- i) le fait de permettre à un utilisateur de sélectionner un sous-ensemble de catégories parmi un ensemble de catégories, et
- ii) le fait de permettre à l'utilisateur d'associer le sous-ensemble sélectionné de catégories à un ou plusieurs contextes à utiliser durant l'exécution du logiciel exécutable sur le deuxième ordinateur (22).

16. Procédé suivant la revendication 15, dans lequel l'étape (b) comprend en outre le stockage des associations sur le premier ordinateur (21) à utiliser durant l'exécution du logiciel exécutable sur le deuxième ordinateur (22).

17. Procédé suivant la revendication 14, dans lequel le logiciel exécutable sur le deuxième ordinateur (22) comprend un logiciel audiovisuel.

18. Procédé suivant la revendication 14, comprenant en outre la création d'un ensemble de catégories, durant au moins un moment ayant lieu de manière concurrente avec l'exécution de logiciel de sélection, au lancement du logiciel de sélection, lorsque le logiciel de sélection est installé au départ, lorsque le logiciel de sélection est mis à jour, et périodiquement à des intervalles prédéterminés.

19. Procédé suivant la revendication 14, comprenant en outre:
- a) la localisation de fichiers audio (12) accessibles pour le deuxième ordinateur, et
- b) la catégorisation des fichiers audio localisés (12) en catégories compatibles avec les catégories transmises au deuxième ordinateur.

20. Programme d'ordinateur réalisé dans le cadre d'un support pouvant être lu par ordinateur, le programme d'ordinateur, lorsqu'il est exécuté par un ordinateur, amenant l'ordinateur à exécuter les étapes de procédé suivant la revendication 14.
